(19) Europäisches Patentamt
European Patent Office
Office européen des brevets

(11) **EP 3 184 406 A1**

(12) **EUROPEAN PATENT APPLICATION**
published in accordance with Art. 153(4) EPC

(43) Date of publication:
**28.06.2017 Bulletin 2017/26**

(21) Application number: **15833563.8**

(22) Date of filing: **08.07.2015**

(51) Int Cl.:
**B62D 61/02** (2006.01)          **B60W 30/02** (2012.01)
**B60W 30/045** (2012.01)

(86) International application number:
**PCT/CN2015/083523**

(87) International publication number:
**WO 2016/026356 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.08.2014 CN 201410409611**

(71) Applicant: **Beijing Lingyun Technology Co. Ltd. Beijing 100176 (CN)**

(72) Inventor: **ZHU, Lingyun Beijing 100176 (CN)**

(74) Representative: **Awapatent AB**
**P.O. Box 45086**
**104 30 Stockholm (SE)**

(54) **TWO-WHEEL ELECTRIC VEHICLE**

(57) The present invention relates to a two-wheel electric vehicle, comprising: a frame(1); a housing (3)connected to the frame(1); one front wheel(2) and one rear wheel(6); and a gyroscope device(5), the gyroscope device(5) comprises a flywheel(13); and a control system(10), the control system(10) controlling a precession angular speed of the flywheel(13) within a period during which the two-wheel electric vehicle is started but does not run, a period during which the two-wheel electric vehicle runs normally or a period during which the two-wheel electric vehicle steers, to keep balance of a vehicle body. The two-wheel electric vehicles solves the technical problem existing in the prior art of poor stability of the two-wheel electric vehicle.

Fig.1

EP 3 184 406 A1

## Description

## Technical Field

The present invention relates to the field of electric vehicles, and more particularly to a two-wheel electric vehicle having a gyroscope device.

## Background

The related background technologies of the present invention are described below; however, these descriptions do not necessarily constitute the prior art of the present invention.

Nowadays, environmental pollution becomes increasingly severe, energy supply becomes limited and inadequate, and traffic congestion occurs more and more often. Green, low-carbon, lightweight, and miniaturized vehicles gradually become a new trend in the development of the industry and become increasingly popular among travelers.

A two-wheeled vehicle appeared in 1914, which has a front wheel and a rear wheel and implements left-right balance by means of a mechanical gyroscope, so that stability as that of a normal four-wheeled vehicle is provided, that is, the vehicle does not fall when being static. As compared with a conventional four-wheeled vehicle, a two-wheeled vehicle not only changes people's driving habits, but also has a lighter weight and a smaller volume and is therefore more energy-saving. However, because control of a mechanical gyroscope is relatively complex, requirements on components such as a microprocessor, a motor, and a sensor are also relatively high, and in addition, there are more safety problems; therefore, in the past century, two-wheel electric vehicles have not made substantial breakthroughs. Many two-wheel electric vehicles that have been developed at present basically all have problems such as undesirable stability, slow start of a gyroscope, and a limited turning capability, and therefore fail to achieve commercial scale up.

In fact, there are many types of two-wheel vehicles, for example, a normal motorcycle and a scooter, which can provide higher efficiency than conventional four-wheel car. However, the efficiency mainly comes from physical differences between a two-wheeled vehicle and a four-wheeled car, for example, a reduced weight, a relatively small friction area, and a reduced resistance. In addition, due to factors such as influence by a weather condition, for example, wind, a safety problem when a crash accident occurs, and that stability of a vehicle must be kept during the use of the vehicle, many users are not willing to or cannot use a motorcycle instead of an vehicle as a vehicle.

A solution for protecting a user (driver) of a two-wheeled vehicle from influence by bad weather and heavy wind is usually limited to: A device, for example, a windshield that can protect the driver from external influence is used for partial shielding, to allow the user to use one leg or two legs to help stabilize the vehicle when the vehicle is static or runs at a low speed, that is, two feet of the driver can directly contact the ground. In addition, there are some other solutions in the prior art, for example, one in which an enclosed cab is used on a two-wheeled vehicle; however, because the solution does not use an additional wheel to stabilize a vehicle, the vehicle may be unable to stand stably in some states.

Research on stabilizing a vehicle by using a gyroscope may be traced back to about a hundred years ago. However, because of problems such as complexity and safety of a gyroscope system, for a solution to a problem of stability in high-speed steering of a two-wheeled vehicle, so far there is no product of a commercial scale.

## Summary

An objective of the present invention is to provide a two-wheel electric vehicle, including a gyroscope device. The gyroscope device can enable a two-wheel electric vehicle to keep balance of a body when the two-wheel electric vehicle is static but a power supply is not turned off, for example, within a period of a wait at a traffic light, within a period during which the vehicle runs at a low speed, and within a period during which the vehicle steers.

According to an aspect of the present invention, the present invention provides a two-wheel electric vehicle, including: a frame; a housing connected to the frame; one front wheel and one rear wheel each connected to the frame; a gyroscope device connected to the frame, the gyroscope device including a flywheel; and a control system, the control system controlling a precession angular speed of the flywheel within a period during which the two-wheel electric vehicle is started but does not run, a period during which the two-wheel electric vehicle runs normally or a period during which the two-wheel electric vehicle steers, to keep balance of a body of the two-wheel electric vehicle.

According to another aspect of the present invention, in the two-wheel electric vehicle, there is one gyroscope device and only one flywheel is included.

According to another aspect of the present invention, in the two-wheel electric vehicle, there are two gyroscope devices, each gyroscope device includes one flywheel, and the two gyroscope devices are disposed in a manner of being symmetrical relative to a longitudinal axis of the frame.

According to another aspect of the present invention, the control system includes a microprocessor, an electronic gyroscope, an angle sensor, and low-speed motor controller, when the vehicle tilts in a transverse direction because of an external force, the electronic gyroscope reads a tilt angle of the body, the angle sensor reads the precession angular speed of the flywheel, and the microprocessor determines, based on the tilt angle and the precession angular speed, a magnitude and a direction of the precession angular speed of the flywheel that are required to keep the balance of the body, and outputs the magnitude and the direction to the low-speed motor controller, so as to keep the balance of the body by controlling a precession of the flywheel.

According to another aspect of the present invention, the control system includes a microprocessor, an electronic gyroscope, and an angle sensor, when the vehicle steers, the electronic gyroscope reads a tilt angle in a transverse direction and an angular speed of the vehicle during steering and a centripetal acceleration of the vehicle, the angle sensor reads the precession angular speed of the flywheel, and the microprocessor determines a required magnitude and direction of the precession angular speed of the flywheel based on the tilt angle, the angular speed, the centripetal acceleration, and the precession angular speed and outputs the magnitude and direction to the low-speed motor controller, so as to keep the balance of the body by controlling a precession of the flywheel.

According to another aspect of the present invention, the control system includes a microprocessor, an electronic gyroscope, an angle sensor, and a low-speed motor controller, when the vehicle tilts in a transverse direction because of an external force, the electronic gyroscope reads a tilt angle of the body, the angle sensor reads precession angular speeds of the two flywheels, and the microprocessor determines, based on the tilt angle and the precession angular speeds, magnitudes and directions, of the precession angular speeds of the two flywheels, required to keep the balance of the body of the vehicle and outputs the magnitudes and directions to the low-speed motor controller, so as to keep the balance of the body by controlling precessions of the two flywheels.

According to another aspect of the present invention, the control system includes a microprocessor, an electronic gyroscope, an angle sensor, and a low-speed motor controller, when the vehicle steers, the electronic gyroscope reads a tilt angle in a transverse direction and an angular speed of the vehicle during steering and a centripetal acceleration of the vehicle, the angle sensor reads precession angular speeds of the flywheels, and the microprocessor determines required magnitudes and directions of the precession angular speeds of the two flywheels based on the tilt angle, the angular speed, the centripetal acceleration, and the precession angular speeds and outputs the magnitudes and directions to the low-speed motor controller, so as to keep the balance of the body by controlling precessions of the two flywheels.

According to another aspect of the present invention, when the vehicle steers, the microprocessor further determines an angle value of a tilt which the body of the vehicle should generate in a transverse direction, and the angle value can enable the vehicle to use a component, in the transverse direction of a gravity, generated from the tilt of the body to cancel a centrifugal force or an external force in the transverse direction which is generated during steering of the vehicle, to enable the body of the vehicle to keep a balanced state.

According to another aspect of the present invention, the control system includes two groups of low-speed motor controllers.

According to another aspect of the present invention, the period during which the two-wheel electric vehicle is started but does not run is for example, a period of a wait for a green light at a crossing, and another period of emergency braking.

According to the two-wheel electric vehicle of the present invention, because one or two gyroscope devices are provided, within a period during which the vehicle is started but does not run, for example, during a wait for a green light at a crossing, when the vehicle comes under an effect of an external force during normal driving, and when the vehicle steers, an effect of the one or two gyroscope devices can be used to implement balance of a body of the vehicle in a transverse direction, that is, a left-right direction of the vehicle, thereby working out a technical problem existing in the prior art that a two-wheel electric vehicle has undesirable stability.

## Brief Description of the Drawings

The features and advantages of the present invention will become clearer by reading the embodiments provided with reference to the accompanying drawings, where in the accompanying drawings:

FIG. 1 is a schematic view of an embodiment in which a two-wheel electric vehicle has one gyroscope device according to the present invention;

FIG. 2 is a schematic view of a control system of the two-wheel electric vehicle having one gyroscope device according to the present invention;

FIG. 3 is a schematic view of one gyroscope device of the two-wheel electric vehicle having one gyroscope device according to the present invention, in which a flywheel is shown;

FIG. 4 is a schematic view of another embodiment in which a two-wheel electric vehicle has two gyroscope devices according to the present invention;

FIG. 5 is a schematic view of a control system of the two-wheel electric vehicle having two gyroscope devices according to the present invention;

FIG. 6 is a schematic view of two gyroscope devices of the two-wheel electric vehicle having two gyroscope devices according to the present invention, in which two flywheels are shown; and

FIG. 7 is a schematic exploded view of one gyroscope device according to the present invention.

**Detailed Description of Embodiments**

The exemplary implementations of the present invention are described below in detail with reference to the accompanying drawings. The descriptions of the exemplary implementations are merely used for illustrative purposes, and do not constitute any limitation to the application or usage of the present invention.

As discussed above, for an prior art two-wheel electric vehicle, balance in a transverse direction, that is, a left-right direction of the vehicle is basically implemented by means of a mechanical gyroscope. However, because control of a mechanical gyroscope is relatively complex, requirements on components such as a microprocessor, a motor, and a sensor are also relatively high, and in addition, more safety problems are involved; therefore, many prior art two-wheel electric vehicles substantially all have problems such as undesirable stability, slow speed of start of a gyroscope, and a limited turning capability, and therefore fail to achieve commercial scale up.

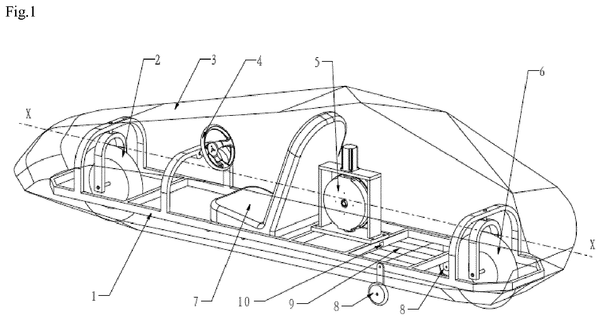

FIG. 1 is a schematic structural view of a two-wheel electric vehicle having one gyroscope device according to the present invention. Hereinafter, for simplicity, the "two-wheel electric vehicle" is generally referred to as an "vehicle". The two-wheel electric vehicle includes: a frame 1, a housing 3, a front wheel 2, a rear wheel 6, a gyroscope device 5, a steering wheel 4, a seat 7, an auxiliary wheel 8, a battery group 9, and a control system 10. The housing 3 is connected to the frame 1, and the front wheel 2 and the rear wheel 6 are also both connected to the frame 1. The gyroscope device 5 may be fixed, from the bottom, on the frame 1 in a detachable manner by using a connecting piece such as a bolt. Certainly, the gyroscope device 5 may also be attached, from the bottom, to the frame 1 in a manner of fixed connection such as welding. A location of the gyroscope device 5 on the frame 1 is preferably a location in the middle along a longitudinal direction of the frame 1, but is not limited thereto. Similarly, the control system 10 may also be fixed on the frame 1 in a detachable manner by using a connecting piece such as a bolt. Certainly, the control system 10 may also be attached to the frame 1 in a manner of fixed connection such as welding.

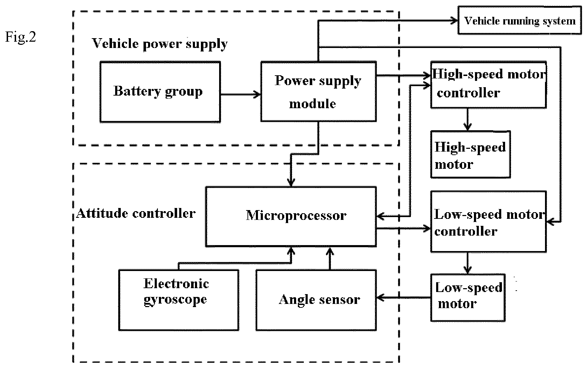

FIG. 2 is a brief schematic view of the control system 10 of the two-wheel electric vehicle having one gyroscope device in FIG. 1. The control system 10 includes: a power supply, an attitude controller, a high-speed motor controller, a high-speed motor, a low-speed motor controller, a low-speed motor, and the like. The attitude controller includes: an electronic gyroscope, a microprocessor, and an angle sensor.

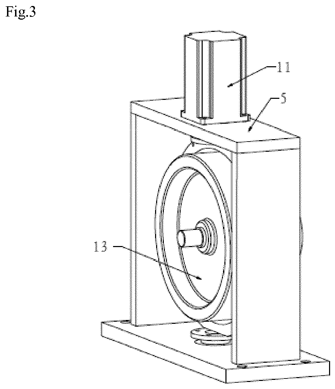

FIG. 3 is a schematic view of one gyroscope device 5 of the two-wheel electric vehicle having one gyroscope device according to the present invention. A flywheel 13 is connected to the low-speed motor 11.

Operations of the two-wheel electric vehicle having one gyroscope device are described below in detail.

Before the vehicle is started, two auxiliary wheels 8 extend to contact the ground and are at working locations, so as to assist the front wheel 2 and the rear wheel 6, to enable the two-wheel electric vehicle to be balanced and stand still on the ground.

After the vehicle is started, the gyroscope device 5 is started by means of the high-speed motor and begins to run. The flywheel 13 of the gyroscope device 5 is in an axial rotation state by means of the high-speed motor. Once the vehicle runs, the two auxiliary wheels 8 are retracted and are at non-working locations, and in this case, the vehicle contacts the ground by means of only the front wheel and the rear wheel. Within a period during which the vehicle normally runs, when the vehicle is subjected to an external force and tilts in a transverse direction, that is, in a left-right direction of the vehicle, the electronic gyroscope detects an angle at which a body tilts in the transverse direction and a value of an angular speed of the vehicle, and transfers the angle and the value of the angular speed to the microprocessor. The angle sensor also reads a precession angular speed of the flywheel 13 and transfers the precession angular speed to the microprocessor. The microprocessor calculates, according to these values, a magnitude and a direction of a torque required to keep transverse balance of the body of vehicle, and converts the magnitude and the direction into a required magnitude and direction of the precession angular speed of the flywheel 13, and subsequently the microprocessor sends an instruction to the low-speed motor controller according to the required magnitude and direction of the precession angular speed. The low-speed motor controller drives the low-speed motor 11, so as to control the precession angular speed and a direction of the flywheel 13, to enable the flywheel 13 to generate a torque with the required direction and magnitude to keep balance of the body of vehicle, thereby keeping the balance of the body of vehicle.

Within a period during which the vehicle is started but does not run, for example, in a case of a wait for a green light at a crossing or another case of emergency braking, that is, the vehicle does not turn off the power supply but stops running, in this case, the auxiliary wheels 8 are still at non-working locations. In a case of support with only the front wheel 2 and the rear wheel 6, the body of the vehicle also tilts in a transverse direction. When the body tilts, the electronic gyroscope in the control system detects an angle at which the body tilts in a transverse direction and an angular speed of the vehicle, and the electronic gyroscope then transfers the angle at which the body tilts in the transverse direction and a value of the angular speed of the vehicle to the microprocessor. The angle sensor reads the precession angular speed of the flywheel 13 and transfers the precession angular speed of the flywheel 13 to the microprocessor. The microprocessor calculates, according to these values, a magnitude and a direction of a torque required to keep the balance of the body of the vehicle. Subsequently, the microprocessor calculates a required magnitude and direction of the precession angular speed of the flywheel 13 according to a moment of inertia of the flywheel 13, a rotational speed of the flywheel 13, and the torque required to keep balance, and subsequently sends an instruction to the low-speed motor controller according to the required magnitude and direction of the precession angular speed, to drive the low-speed motor 11, so as to control a magnitude and a direction of the precession angular speed of the flywheel 13, to enable the flywheel 13 to generate a torque with the required direction and magnitude to keep the balance of the body of the vehicle, thereby keeping the balance of the body of the vehicle.

When the vehicle steers during running, the vehicle is subjected to an external force and the body tilts in a transverse direction, and in this case the electronic gyroscope of the control system detects an angle at which the body tilts in the transverse direction, an angular speed of the vehicle, and a centripetal acceleration of the vehicle, and transfers the angle, the angular speed, and the centripetal acceleration to the microprocessor. The angle sensor reads the precession angular speed of the flywheel 13 and transfers the precession angular speed to the microprocessor. The microprocessor calculates, according to these values, an angle value of a tilt that the body of the vehicle should generate in the transverse direction, where the angle value can enable the vehicle to use a component, in the transverse direction of a gravity, generated from the tilt of the body to cancel the centrifugal force generated during steering of the vehicle or the external force in the transverse direction, so that the body keeps a balanced state. The microprocessor subsequently converts the value into a required magnitude and direction of the precession angular speed of the flywheel 13, and sends an instruction to the low-speed motor controller, to drive the low-speed motor 11 to control a magnitude and direction of the precession angular speed of the flywheel 13, to enable the gyroscope device 5 to generate a torque with the required direction and magnitude to enable the vehicle to keep balance, thereby keeping the balance of the body.

When the vehicle is subjected to an external force, for example, a gravity, wind, and a crash and tilts in a transverse direction, the electronic gyroscope detects an angle at which the body tilts in a transverse direction and an angular speed of the vehicle and transfers the angle and the angular speed to the microprocessor. The angle sensor reads the precession angular speed of the flywheel and transfers the precession angular speed to the microprocessor. The microprocessor calculates, according to the angle at which the body of the vehicle tilts, the angular speed, and the precession angular speed of the flywheel, a direction and a magnitude of a torque that the gyroscope device 5 is required to output to enable the body of the vehicle to restore a standing state. Similarly, the microprocessor sends an instruction to the low-speed motor controller based on the result, to enable the low-speed motor to drive the flywheel 13, so as to enable the gyroscope device 5 to generate a torque with the required direction and magnitude to keep balance of the vehicle, thereby keeping balance of the body of the vehicle.

A magnitude of a torque generated by the gyroscope device is directly proportional to the moment of inertia of the flywheel 13, the rotational speed of the flywheel 13, and the precession angular speed of the flywheel.

Specifically, the moment of inertia of the flywheel may be calculated by using the following formula:

A flywheel moment M generally represents one amount of rotational inertia of a mechanical system.

$$M = GD\text{\textasciicircum}2$$

G: Equal to an equivalent weight of a load in a motor traction system (that is, a total weight of a load is equivalent to the weight of one mass point at one end of an inertia radius).

D: An inertia diameter.

An equivalence relationship between a moment of inertia of the system and the flywheel moment is: J = (GD^2)/4g

A torque that can be generated by a gyroscope device is calculated by using the following formula:

$$T = J * \omega 1 * \omega 2$$

T: Equal to a torque generated by the gyroscope device

J: The moment of inertia of the flywheel

ω1: A rotational speed of the flywheel

ω2: A torsional speed of the flywheel

A required torsional speed of the flywheel may be calculated according to a height of a center of mass and a weight of the vehicle

$$\omega 2 = T/(J * \omega 1)$$

In an embodiment of the present invention, a designed weight of the flywheel is 50 kg, the moment of inertia is 0.36 kg·m$^2$, a rotational speed of the flywheel is 12000 revolutions (1256 radian/second). A torsional speed of the flywheel that can be provided by the motor is 300 revolutions (31.4 radian/second). The gyroscope device may provide a torque of about 14000 NM.

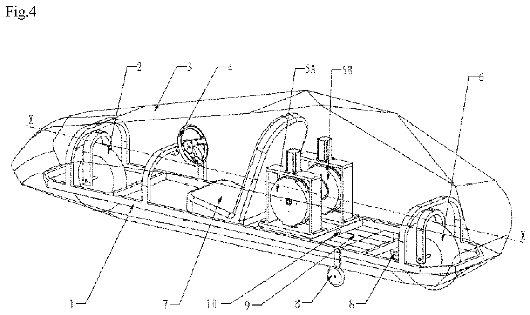

FIG. 4 is a schematic view of a two-wheel electric vehicle with two gyroscope devices according to the present invention. As shown in FIG. 4, in a case in which double gyroscope devices are used, preferably, two gyroscope devices 5A and 5B are disposed in a manner of being symmetrical relative to a longitudinal axis X of the vehicle; however, the present invention is not limited thereto. In addition, the structure of the vehicle is similar to the foregoing structure with one gyroscope device, and therefore is no longer elaborated herein.

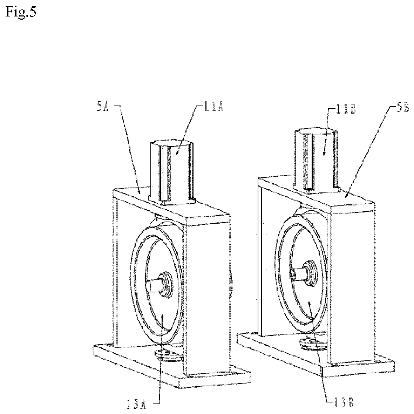

FIG. 5 shows the gyroscope devices 5A and 5B of the two-wheel electric vehicle with two gyroscope devices, and the gyroscope devices 5A and 5B respectively include flywheels 13A and 13B. The flywheels 13A and 13B are respectively connected to motors 11A and 11B.

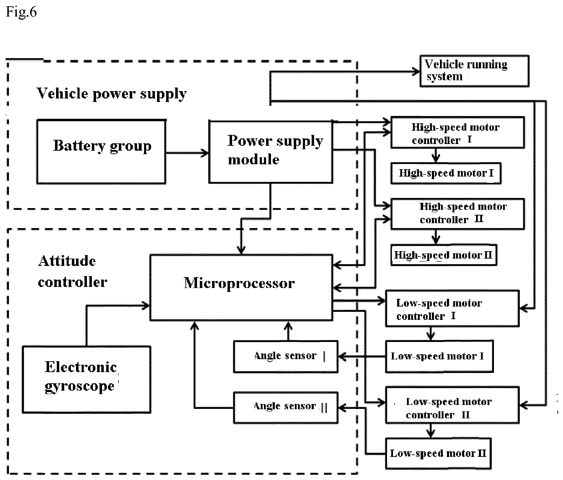

FIG. 6 is a schematic view of a control system of the two-wheel electric vehicle with two gyroscope devices. As can be seen in FIG. 6, the control system includes a power supply, an attitude controller, two groups of high-speed motors I and II and high-speed motor controllers I and II, two groups of low-speed motors I and II and low-speed motor controllers I and II, and the like. The attitude controller includes: an electronic gyroscope, a microprocessor, and an angle sensor I, and an angle sensor II.

Operations of the two-wheel electric vehicle with two gyroscope devices are described below in detail. For simplicity, hereinafter, the two-wheel electric vehicle is generally referred to as an "vehicle".

Before the vehicle is started, two auxiliary wheels 8 extend to contact the ground and at working locations, so as to assist a front wheel 2 and a rear wheel 6, to enable the vehicle to be balanced and stand still on the ground.

After the vehicle is started, the control system 10 first begins to work. The microprocessor outputs a signal to the high-speed motor controller I and the high-speed motor controller II, to respectively start the high-speed motor I and the high-speed motor II. The flywheels 13A and 13B of the two gyroscope devices 5A and 5B start by means of the high-speed motor I and the high-speed motor II, to be in an axial rotation state. When the high-speed motors I and II reach set rotational speeds, the high-speed motor controller I and the high-speed motor controller II feed back signals to the microprocessor. The microprocessor outputs a control signal to the low-speed motor controller I and the low-speed motor controller II, to drive the low-speed motor I and the low-speed motor II to work. The low-speed motor I and the low-speed motor II begin to work, and in this case, the two auxiliary wheels 8 are retracted and are at non-working locations. The flywheels 13A and 13B of the gyroscope devices 5A and 5B generate precession motion by means of the low-speed motors I and II.

When the vehicle is subjected to an effect of a gravity, a manipulative force of a driver or another external force to tilt in a transverse direction, the electronic gyroscope of the control system detects an angle at which the vehicle tilts in a transverse direction and an angular speed and transfers the angle and the angular speed to the microprocessor. The angle sensors I and II respectively read precession angular speeds of the flywheels 13A and 13B and transfer the precession angular speeds to the microprocessor. The microprocessor calculates, based on the foregoing data, magnitudes and directions, of the precession angular speeds of the flywheels 13, required to keep balance of a body of the vehicle. The microprocessor then outputs a control signal to the low-speed motor controller I and the low-speed motor controller II, and the low-speed motor controller I and the low-speed motor controller II control the low-speed motor I and the low-speed motor II, so as to control magnitudes and directions of the precession angular speeds of the flywheels 13A and 13B, to enable the gyroscope devices 5A and 5B to generate torques with the required magnitudes and directions, thereby keeping the balance of the body of the vehicle.

When the vehicle stops to wait for a green light at a crossing, that is, the vehicle does not turn off the power supply but stops running, the vehicle tilts in a transverse direction. The electronic gyroscope detects an angle at which the body of the vehicle tilts in the transverse direction and a value of an angular speed and transfers the angle and the value of the angular speed to the microprocessor. The angle sensors I and II respectively read the precession angular speeds of the flywheels 13A and 13B and transfer the precession angular speeds to the microprocessor. The microprocessor further calculates, according to these values, torques required to keep the balance of the body of the vehicle. The microprocessor calculates required magnitudes and directions of the precession angular speeds of the flywheels 13A and 13B according to moments of inertia of the flywheels 13A and 13B, the precession angular speeds, and the torques required to keep the balance of the body of the vehicle, and subsequently sends instructions to the low-speed motor controller I and the low-speed motor controller II according to the required magnitudes and directions of the precession angular speeds, to drive the low-speed motor I and the low-speed motor II, so as to control magnitudes and directions of the precession angular speeds of the flywheels 13A and 13B, to enable the gyroscope devices 5A and 5B to generate torques with corresponding magnitudes and directions, to keep the balance of the body of the vehicle.

When the vehicle steers and tilts during run, the electronic gyroscope detects an angle at which the body of the vehicle tilts in a transverse direction, an angular speed of the vehicle, and a centripetal acceleration of the vehicle. The angle sensors I and II respectively read precession angular speeds of the flywheels 13 and transfer the precession angular speeds to the microprocessor. The microprocessor calculates, according to the foregoing data, torques required to steer the vehicle. Specifically, the microprocessor calculates an angle value of a tilt that the body should generate in the transverse direction, where the angle value can enable the vehicle to use a component, in the transverse direction of a gravity, generated from the tilt of the body to cancel a centrifugal force generated during steering of the vehicle or an external force in the transverse direction, so that the body keeps a balanced state. The microprocessor outputs a signal to the low-speed motor controller I and the low-speed motor controller II, and the low-speed motor controller I and the low-speed motor controller II control the low-speed motor I and the low-speed motor II to operate, to drive the flywheels 13A and 13B to perform precessions of corresponding directions and magnitudes, so as to enable the gyroscope devices 5A and 5B to generate torques which enables the body of the vehicle to tilt in the transverse direction, to enable the vehicle to keep a tilted state during steering. The microprocessor adjusts magnitudes and directions of the precession angular speeds of the flywheels 13 according to a speed of the vehicle during steering, the angle at which the body tilts in the transverse direction, and the angular speed, to enable the body to stay in a stable tilted state. When detecting that the vehicle restores a straight-run state from a steering state, the control system then correspondingly adjusts the magnitudes and directions of the precession angular speeds of the flywheels 13, to enable the body to restore straight-run balanced states.

It should be noted that the two-wheel electric vehicle of the present invention may also use three or more gyroscope devices, of which effects and principles are similar to those introduced above. However, a single gyroscope device and double gyroscope devices are undoubtedly the most efficient from a manufacturing cost to energy consumption.

Assembly of a structure of a gyroscope device with a flywheel is described below in detail.

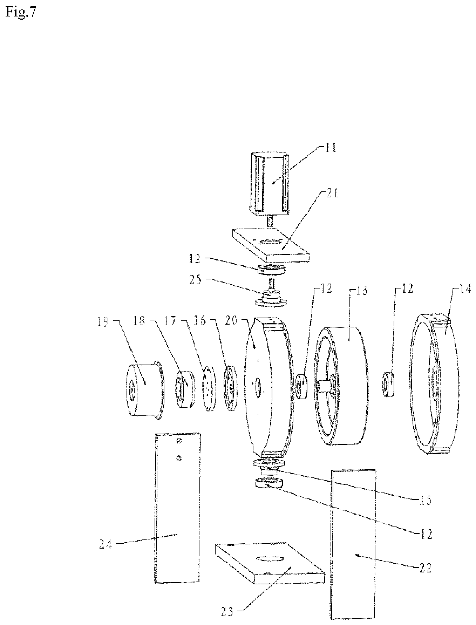

As shown in FIG. 7, a gyroscope device 5 includes a flywheel 13. A shaft on two ends of the flywheel is connected to bearings 12. The flywheel of which the two ends are connected to the bearings is first mounted in a flywheel front cover 20, and a flywheel rear cover 14 is then installed on the axially connected bearing on the other surface of the flywheel. The flywheel front cover 20 and the flywheel rear cover 14 are tightened by using a bolt. A flywheel connection flange 16 is connected to the shaft of the flywheel at one side of the flywheel front cover by using a bolt. A motor connection flange 17 is connected to the high-speed motor 18 by using a bolt. The high-speed motor connection flange 17 connected to the high-speed motor is connected to the flywheel connection flange 16 by using a bolt. A motor cover 19 is connected to a motor by using a bolt, and the motor cover 19 is then rotated to a suitable angle, to align a hole of the motor cover 19 with a bolt hole of the flywheel front cover 20, and the motor cover 19 is connected to the flywheel front cover 20 by using a bolt.

A flywheel cover upper flange 25 is connected, by using a bolt, above the installed flywheel cover, and a flywheel cover lower flange 15 is connected under the installed flywheel cover. Bearings are respectively installed on the flywheel cover upper flange 25 and the flywheel cover lower flange 15.

A support right cover plate 22 and a support left cover plate 24 are connected on a support lower cover plate 23 by using a bolt. An assembled flywheel box lower bearing is aligned with a bearing step hole of the support lower cover plate 23 for installation and fitting. A support upper cover plate 21 is installed at a location of a flywheel box upper bearing, and the support upper cover plate 21 is then connected to the support right cover plate 22 and the support left cover plate 24 by using a bolt. A motor 11 is connected to the flywheel cover upper flange 25, and the motor is then connected to the support upper cover plate 25 by using a bolt. Here, assembly of the gyroscope device is completed.

About the terms, the "transverse direction" herein refers to a left-right direction of a body of a vehicle, that is, a width direction of the vehicle, and the "longitudinal direction" refers to a front-rear direction of the body of the vehicle, that is, a length direction of the vehicle.

Although the present invention is described with reference to the exemplary embodiments, it should be understood that the present invention is not limited to the specific embodiments described and shown in the specification. A person skilled in the art can make various changes to the exemplary embodiments without departing from the scope limited in the claims, and all these changes fall within the protection scope of the present invention.

**Claims**

1. A two-wheel electric vehicle, comprising:

   a frame;
   a housing connected to the frame;
   one front wheel and one rear wheel both connected to the frame;
   a gyroscope device connected to the frame, the gyroscope device comprising a flywheel; and
   a control system, the control system controlling a precession angular speed of the flywheel within a period during which the two-wheel electric vehicle is started but does not run, a period during which the two-wheel electric vehicle runs normally or a period during which the two-wheel electric vehicle steers, to keep balance of a body of the two-wheel electric vehicle.

2. The two-wheel electric vehicle according to claim 1, wherein there is one gyroscope device and only one flywheel is comprised.

**3.** The two-wheel electric vehicle according to claim 1, wherein there are two gyroscope devices, each gyroscope device comprises one flywheel, and the two gyroscope devices are disposed in a manner of being symmetrical relative to a longitudinal axis of the frame.

**4.** The two-wheel electric vehicle according to claim 2, wherein the control system comprises a microprocessor, an electronic gyroscope, an angle sensor, and a low-speed motor controller, when the vehicle tilts in a transverse direction because of an external force, the electronic gyroscope reads a tilt angle of the body, the angle sensor reads the precession angular speed of the flywheel, and the microprocessor determines, based on the tilt angle and the precession angular speed, a magnitude and a direction of the precession angular speed of the flywheel that are required to keep the balance of the vehicle body, and outputs the magnitude and the direction to the low-speed motor controller, so as to keep the balance of the vehicle body by controlling a precession of the flywheel.

**5.** The two-wheel electric vehicle according to claim 2, wherein the control system comprises a microprocessor, an electronic gyroscope, an angle sensor, and a low-speed motor controller, when the vehicle steers, the electronic gyroscope reads a tilt angle in a transverse direction and an angular speed of the vehicle during steering and a centripetal acceleration of the vehicle, the angle sensor reads the precession angular speed of the flywheel, and the microprocessor determines a required magnitude and direction of the precession angular speed of the flywheel based on the tilt angle, the angular speed, the centripetal acceleration, and the precession angular speed and outputs the magnitude and direction to the low-speed motor controller, so as to keep the balance of the vehicle body by controlling a precession of the flywheel.

**6.** The two-wheel electric vehicle according to claim 3, wherein the control system comprises a microprocessor, an electronic gyroscope, an angle sensor, and a low-speed motor controller, when the vehicle tilts in a transverse direction because of an external force, the electronic gyroscope reads a tilt angle of the body, the angle sensor reads precession angular speeds of the two flywheels, and the microprocessor determines, based on the tilt angle and the precession angular speeds, magnitudes and directions, of the precession angular speeds of the two flywheels, required to keep the balance of the body of the vehicle and outputs the magnitudes and directions to the low-speed motor controller, so as to keep the balance of the body by controlling precessions of the two flywheels.

**7.** The two-wheel electric vehicle according to claim 3, wherein the control system comprises a microprocessor, an electronic gyroscope, an angle sensor, and a low-speed motor controller, when the vehicle steers, the electronic gyroscope reads a tilt angle in a transverse direction and an angular speed of the vehicle during steering and a centripetal acceleration of the vehicle, the angle sensor reads precession angular speeds of the flywheels, and the microprocessor determines required magnitudes and directions of the precession angular speeds of the two flywheels based on the tilt angle, the angular speed, the centripetal acceleration, and the precession angular speeds and outputs the magnitudes and directions to the low-speed motor controller, so as to keep the balance of the vehicle body by controlling precessions of the two flywheels.

**8.** The two-wheel electric vehicle according to claim 5 or 7, wherein when the vehicle steers, the microprocessor further determines an angle value of a tilt that the body of the vehicle should generate in a transverse direction, and the angle value can enable the vehicle to use a component, in the transverse direction of a gravity, generated from the tilt of the body to cancel a centrifugal force or an external force in the transverse direction that is generated during steering of the vehicle, to enable the body of the vehicle to keep a balanced state.

**9.** The two-wheel electric vehicle according to claim 6 or 7, wherein the control system comprises two groups of low-speed motor controllers.

**10.** The two-wheel electric vehicle according to claim 1, wherein the period during which the two-wheel electric vehicle is started but does not run is for example, a period of a wait for a green light at a crossing, and another period of emergency braking.

Fig.1

Fig.2

**Vehicle power supply**

| Battery group | → | Power supply module |

→ Vehicle running system

→ High-speed motor controller → High-speed motor

**Attitude controller**

Microprocessor

Electronic gyroscope

Angle sensor ← Low-speed motor

Low-speed motor controller

Fig.3

Fig.4

Fig.5

Fig.6

**Vehicle power supply**

**Vehicle running system**

**Battery group**

**Power supply module**

**High-speed motor controller I**

**High-speed motor I**

**High-speed motor controller II**

**High-speed motor II**

**Attitude controller**

**Microprocessor**

**Low-speed motor controller I**

**Electronic gyroscope**

**Angle sensor I**

**Low-speed motor I**

**Angle sensor II**

**Low-speed motor controller II**

**Low-speed motor II**

Fig.7

# INTERNATIONAL SEARCH REPORT

| International application No. |
|---|
| PCT/CN2015/083523 |

## A. CLASSIFICATION OF SUBJECT MATTER

B62D 61/02 (2006. 01) i; B60W 30/02 (2012. 01) I; B60W 30/045 (2012. 01) i

According to International Patent Classification (IPC) or to both national classification and IPC

## B. FIELDS SEARCHED

Minimum documentation searched (classification system followed by classification symbols)

B62D; B60W

Documentation searched other than minimum documentation to the extent that such documents are included in the fields searched

Electronic data base consulted during the international search (name of data base and, where practicable, search terms used)

WPI, EPODOC, CNPAT, CNKI: gyro, flywheel, balance, sensor

## C. DOCUMENTS CONSIDERED TO BE RELEVANT

| Category* | Citation of document, with indication, where appropriate, of the relevant passages | Relevant to claim No. |
|---|---|---|
| X | CN 103189267 A (LIT MOTORS CORP.) 3 July 2013 (03. 07. 2013) see description, paragraphs [0031]-[0054], claim 1 and figures 1-6 | 1-10 |
| X | GB 2465020 A (WEIR ANTONY RICHARD) 12 May 2010 (12.05.2010) see description, page 4, line 20 to page 9, line 15 and figures 1-5 | 1-10 |
| PX | CN 204095952 U (ZHU, Lingyun) 14 January 2015 (14.01.2015) see claims 1-10 | 1-10 |
| A | JP 5660780 A (SATO TSUTOMU) 25 May 1981 (25.05.1981) see the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 August 2015 | 09 September 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Yani<br><br>Telephone No. (86-10) 62085290 |

Form PCT/ISA /210 (second sheet) (July 2009)

INTERNATIONAL SEARCH REPORT
Information on patent family members

International application No.

PCT/CN2015/083523

| Patent Documents referred in the Report | Publication Date | Patent Family | Publication Date |
|---|---|---|---|
| CN 103189267 A | 3 July 2013 | US 2011231041 A1 | 22 September 2011 |
| | | US 2011231060 A1 | 22 September 2011 |
| | | DK 2547576 T3 | 15 September 2014 |
| | | SG 184924 A1 | 29 November 2012 |
| | | US 8918239 B2 | 23 December 2014 |
| | | AU 2011227701 A1 | 1 November 2012 |
| | | EP 2547576 A1 | 23 January 2013 |
| | | ES 2506965 T3 | 13 October 2014 |
| | | TW 201206752 A | 16 February 2012 |
| | | US 8706390 B2 | 22 April 2014 |
| | | WO 2011115699 A1 | 22 September 2011 |
| | | US 2011231085 A1 | 22 September 2011 |
| | | KR 20130020665 A | 27 February 2013 |
| | | JP 2013522108 A | 13 June 2013 |
| | | PT 2547576 E | 30 September 2014 |
| | | EP 2547576 B1 | 25 June 2014 |
| | | US 8532915 B2 | 10 September 2013 |
| | | AU 2011227701 B2 | 12 February 2015 |
| GB 2465020 A | 12 May 2010 | GB 2465020 B | 10 October 2012 |
| CN 204095952 U | 14 January 2015 | None | |
| JP 5660780 A | 25 May 1981 | None | |

Form PCT/ISA /210 (patent family annex) (July 2009)